# EUROPÄISCHE PATENTSCHRIFT

(11) **EP 0 394 188 B1**
(45) Veröffentlichungstag und Bekanntmachung des Hinweises auf die Patenterteilung: **13.01.1993**
(21) Anmeldenummer: 90810227.0
(22) Anmeldetag: 21.03.1990
(51) Int. Cl.: B23B 51/00

(54) **Fräswerkzeug**
Milling tool
Outil de fraisage

(30) Priorität: 14.04.1989 DE 3912248
(43) Veröffentlichungstag der Anmeldung: 24.10.1990
(73) Patentinhaber: HILTI Aktiengesellschaft, 9494 Schaan (LI)
(72) Erfinder: Lins, Reinhard, CH-9475 Sevelen (CH)
(74) Vertreter: Wildi, Roland

(56) Entgegenhaltungen:
- DE-A- 2 415 240
- FR-A- 2 416 780
- FR-A- 2 521 903
- GB-A- 2 162 099
- US-A- 1 899 727

## Beschreibung

Die Erfindung betrifft ein Fräswerkzeug zum Herstellen abschnittweiser, umlaufender Erweiterungen in Bohrlöchern von Bauteilen aus Mauerwerk, Beton und dgl. Materialien, mit Antriebsschaft und wenigstens einem Fräser, wobei der Fräser einen mit Schneidkörpern versehenen, über ein Halteteil am Antriebsschaft schwenkbar gelagerten Kopf aufweist und zur schwenkbaren Lagerung des Fräsers zwischen Antriebsschaft und Halsteil ein Kugelgelenk mit einem Kugelkopf am freien Ende des Halsteiles und einer Kugelpfanne am Antriebsschaft vorgesehen ist und der Antriebsschaft ausserhalb der koaxialen Axialprojektion des Halsteiles im wesentlichen radial verlaufende Anschlagflächen an einem das Halsteil übergreifenden Führungsbereich des Antriebsschaftes für das Halsteil aufweist.

Ein aus der DE-OS 24 15 240 bekanntes Werkzeug dient der Erstellung zylindrischer Bohrlöcher und der anschliessenden radialen Erweiterung bei fortschreitendem Vortrieb. Das Werkzeug weist einen in Drehung versetzbaren Antriebsschaft auf, an dem bohrrichtungsseitig ein Fräser schwenkbar gelagert ist. Der schwenkbaren Lagerung des Fräsers dient ein kardanisches Gelenk.

Zur Herstellung der Erweiterungen muss der Fräser unter gleichzeitigem Drehantrieb vom Antriebsschaft in Bohrrichtung verschoben werden, wobei der Fräser gegenüber der Achse des Antriebsschaftes ausschwenkt. Die Drehbewegung des Antriebsschaftes wird über das kardanische Gelenk auf den Fräser übertragen. Diese Drehbewegung des Fräsers um die eigene Achse kann beispielsweise bei Auftreffen auf Kiesel oder Armierungseisen zum Verklemmen und dadurch zu Störungen, verbunden mit hohem Verschleiss, führen. Zudem kommen die Erweiterungen zufolge der Herstellung durch Verschieben des Antriebsschaftes in den Bohrlöchern unterschiedlich tief zu liegen und können auch unterschiedliche Formen erlangen, was beim Setzen von Spreizankern in solche Bohrlöcher zu Nachteilen führt.

Aus der US-A-1 899 727 ist ein kombiniertes Bohr- und Räumwerkzeug bekannt. Bei diesem bekannten Werkzeug sind entgegen der Bohrrichtung dem Bohrkopf drei Räumkörper nachgeschaltet, welche über ein Kugelgelenk, in dem als Antriebsschaft ausgebildeten Teil des Werkzeuges gelagert sind. Aufgrund nach aussen hin offener Ausnehmungen sind aufgrund der Zentrifugalkraft die Räumkörper bis zu einem unter 90° zur Werkzeugachse stehenden Winkel ausschwenkbar.

Nachdem bei dem aus der US-A-1 899 727 bekannten Werkzeug drei Räumkörper ausserhalb des Zentrums des Werkzeuges gelagert sind, kommt es zu einer sehr stark wirkenden Zentrifugalkraft, so dass die Räumkörper unter einem 90° zur Werkzeugachse stehenden Winkel ausgeschwenkt werden. Bei einer um diesen Winkel ausgeschwenkten Lage wirken sämtliche radial einwirkenden Beanspruchungen über das Kugelgelenk direkt auf das gesamte Werkzeug. Das Entstehen solcher Kräfte ist bei der Bearbeitung von Mauerwerk, Beton und dgl. aufgrund vorhandener Kiesel und anderweitiger Unebenheiten laufend vorhanden. Somit kann es einerseits beim Bearbeiten solcher Materialein zu starken, das Werkzeug beschädigenden Schlägen kommen und andererseits kann es zu einem Verklemmen des Werkzeuges kommen, da die um 90° ausgeschwenkten Räumkörper radial, d.h. in einer 90° zur Werkzeugachse stehenden Richtung nicht ausweichen können.

Der Erfindung liegt die Aufgabe zugrunde, ein Fräswerkzeug zu Herstellung abschnittsweiser, umlaufender Erweiterungen in Bohrlöchern zu schaffen, das sich durch Störungsunanfälligkeit, selbst bei Auftreffen auf Kiesel oder Armierungseisen, auszeichnet und zu Erweiterungen mit definierbarer Form und vorbestimmbarer Tiefe führt.

Erfindungsgemäss wird die Aufgabe dadurch gelöst, dass der Fräser sich in Bohrrichtung axial an den Antriebsschaft anschliesst und der Führungsbereich eine Zentralbohrung mit kreisrunder Axialprojektion sowie ein von der Zentralbohrung in der Axialprojektionsebene sich exzentrisch erstreckendes, die Anschlagflächen bildendes Langloch mit dem Durchmesser der Zentralbohrung entsprechenden Breite aufweist.

Nach dem Einführen des Antriebsschaftes mit dem Fräser in ein vorgefertigtes Bohrloch kommt es beim Drehen des Antriebsschaftes bei der kleinsten exzentrischen Verlagerung des Halsteiles zu einem Mitdrehen des Fräsers. Diese Exzentrität kommt zustande, weil der Fräser bei Arbeitsrichtung nach unten durch Reibung im Kugelgelenk und bei Arbeitsrichtung über Kopf durch Reibung zwischen Fräser und Antriebsschaft mitgedreht wird, so dass der Fräser wegen seiner fertigungsbedingten Unwucht radial ausschlägt. Bei Arbeitsrichtung ausserhalb der Schwerkraftsachse ist die Exzentrität durch das Eigengewicht des Fräsers gegeben.

Die auf den Fräser ausgeübte Zentrifugalkraft bewirkt, dass die Schneidkörper die Bohrlochwand berühren. Dadurch erhält der Fräser neben seiner Mitnahme-Drehbewegung eine zum Antriebsschaft gegenläufige Abwälzbewegung um seine eigene Achse, wodurch die Schneidkörper immer wieder alternierend in Eingriff kommen und die im Fräser gespeicherte Rotationsenergie schlagend zum Abbau verwenden. Diesem schlagenden Abbaumechanismus ist ein schabender Abbauvorgang durch die Mitnahme-Drehbewegung überlagert.

Läuft der Kopf des Fräsers an einem Kiesel oder Armierungeeisen auf, so findet eine Ausweichen sowohl radial als auch um die eigene Achse statt, was ein Verklemmen verhindert.

Der Fräser schafft eine Erweiterung mit der Mantelkontur des Kopfes entsprechender Form, wobei die Erweiterung an der durch die Lage des Fräsers gegenüber dem Antriebsschaft vorbestimmten Stelle im Bohrloch zustandekommt, da der Antriebsschaft beim Herstellen der Erweiterung axial nicht verschoben wird.

Das Langloch kann vom Achszentrum des Antriebsschaftes einseitig von der Zentralbohrung ausgehen, deren Durchmesser zumindest dem Durchmesser des Halsteiles entspricht. Beim Einführen des Fräswerkzeuges in das Bohrloch ist der Fräser in der Zentralbohrung koaxial zur Achse des Antriebsschaftes ausgerichtet, wobei das Halsteil die Zentralbohrung axial durchragt. Durch Drehen des Antriebsschaftes schwenkt der mitdrehende Fräser mit dem Halsteil in das Langloch aus, wobei die Länge des Langloches das Ausschwenken begrenzt. Die als Anschlagflächen wirkenden Wandungen des Langloches nehmen den ausgeschwenkten Fräser durch Angriff am Halsteil in Drehrichtung des Antriebsschaftes mit. So kommt es zur Rührbewegung des Fräsers und zum umlaufenden Abwälzen des Kopfes an der Wandung des Bohrloches.

Die exzentrische Erstreckung des Langloches not vorzugsweise zum bohrrichtungsseitigen freien Ende des Führungsbereiches hin zu. In Axialprojektion des Antriebsschaftes bildet der Grund des Langloches eine das Ausschwenken des Fräsers definiert begrenzende Schulter, an welcher das Halsteil radial aufläuft. Der Grund des Langloches kann unter einem vom Schwenkpunkt in Bohrrichtung sich öffnenden spitzen Winkel zur Achse des Antriebsschaftes von 10° bis 30°, vorzugsweise 15°, gleichmässig geneigt verlaufen.

Die Erfindung wird nachstehend anhand einer Zeichnung, die ein Ausführungsbeispiel wiedergibt, näher erläutert. Es zeigen
Fig. 1 ein Fräswerkzeug im Arbeitseinsatz, im Längsschnitt;
Fig. 2 einen Schnitt II-II durch die Anordnung nach Fig. 1.

Das Fräswerkzeug besteht aus einem Antriebsschaft 1, der sich aus einer Hohlwelle 2 und einer in diese vorderseitig eingeschraubten Lagerungsbüchse 3 zusammensetzt. In der Lagerungsbüchse 3 ist ein Fräser 4 schwenkbar gelagert.

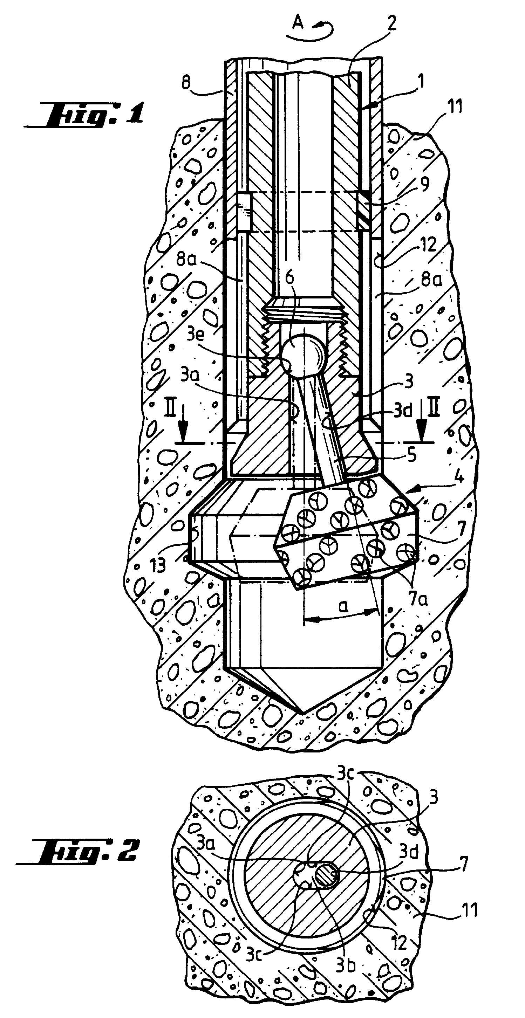

Der Fräser 4 besteht aus einem Halsteil 5, an dessen hinteren Ende ein Kugelkopf 6 und an dessen vorderen Ende ein Kopf 7 mit Schneidkörpern 7a sitzt. Der Kopf 7 ragt von der Lagerungsbüchse 3 nach vorne ab. Das Halsteil 5 durchragt einen Führungsbereich der Lagerungsbüchse 3 beweglich. Der Führungsbereich weist eine Zentralbohrung 3a mit kreisrunder Axialprojektion und ein von der Zentralbohrung 3a in der Axialprojektionsebene sich exzentrisch erstreckendes Langloch 3b auf. Die Breite des Langloches 3b entspricht dem Durchmesser der Zentralbohrung 3a und übersteigt geringfügig den Durchmesser des Halsteiles 5, wie dies die Fig. 2 verdeutlicht.

Die einander zugewandten Wandungen des Langloches 3b bilden Anschlagflächen 3c für das Halsteil 5. Der Grund 3d des Langloches 3b verläuft unter einem spitzen, sich nach vorne öffnenden Winkel a zur Achse des Antriebsschaftes 1 von ca. 15°. Der Kugelkopf 6 stützt sich in einer Kugelpfanne 3e der Lagerungsbüchse 3 ab, wodurch der Fräser 4 gegenüber dem Antriebsschaft 1 frei drehbar und begrenzt verschwenkbar ist.

Die Hohlwelle 2 ist in radialem Abstand von einem Mantelrohr 8 umgeben und in diesem durch einen geschlitzten Gleitring 9 drehbar gelagert. Vorderseitig weist das Mantelrohr 8 Längsschlitze 8a auf und ist im Endabschnitt im Aussendurchmesser erweitert.

Das Fräswerkzeug dient dazu, in einem Bauteil 11, beispielsweise aus Beton, ein vorgefertiges Bohrloch 12 mit einer umlaufenden Erweiterung 13 zu versehen.

Zum Einsatz des Fräswerkzeuges wird dieses in eine vorbestimmte Tiefe in das Bohrloch 12 eingeführt. Das Mantelrohr 8 legt sich zentrierend an die Wandung des Bohrloches 12 an. Die Längsschlitze 8 schaffen eine radiale Federbarkeit des Mantelrohres 8, was das Einführen in das Bohrloch 12 erleichtert. Beim Einführen liegt die Achse des Fräsers 4 in der Achse des Antriebsschaftes 1, wobei das Halsteil 5 die Zentralbohrung 3a konzentrisch durchragt.

Durch anschliessenden Drehantrieb des Antriebsschaftes 1, gemäss Pfeil A in Fig. 1, wird auch der Fräser 4 aufgrund der Reibungskräfte, welche in dem vom Kugelkopf 6 und Kugelpfanne 3e gebildeten Kugelgelenk vorhanden sind, mitgedreht. Der Fräser 4 schwenkt aufgrund der Zentrifugalkräfte, die sich unter anderem durch die asymmetrische Gewichtsverteilung der Schneidkörper 7a ergeben, aus, wobei das Halsteil 5 in das Langloch 3b gelangt. Sobald das Halsteil 5 in das Langloch 3b einragt, wird der Fräser 4, je nach Antriebsdrehrichtung, von einer der beiden Anschlagflächen 3c in Drehrichtung des Antriebsschaftes 1 mitgenommen. Der Kopf 7 läuft somit entlang der Wandung des Bohrloches 12 in Umfangsrichtung um und wird durch die Zentrifugalkraft gegen die Wandung des Bohrloches 12 gedrückt. Die Schneidkörper 7a tragen in schlagender und schabender Weise Material des Bauteiles 11 ab, so dass eine Erweiterung 13 mit der Geometrie des Kopfes 7 entsprechender Form entsteht. Während des Umlaufens des Fräsers 4 kann der Kopf 7, beispielsweise aufgrund von Inhomogenitäten im Material des Bauteiles 11, gegen die Zentrifugalkraft radial zurückgeschlagen werden, wobei er alsdann durch die Zentrifugalkraft wieder an der Wandung aufschlägt. Der Fräser 4 erfährt dadurch auch der Drehbewegung des Antriebsschaftes 1 entgegenwirkende Drehimpulse. Die Herstellung der Erweiterung 13 ist abgeschlossen, sobald das Halsteil 5 am Grund 3d des Langloches 3b aufläuft, wie dies die Fig. 1 zeigt.

## Patentansprüche

1. Fräswerkzeug zum Herstellen abschnittweiser, umlaufender Erweiterungen (13) in Bohrlöchern (12) von Bauteilen (11) aus Mauerwerk, Beton und dgl. Materialien, mit Antriebsschaft (1) und wenigstens einem Fräser (4), wobei der Fräser (4) einen mit Schneidkörpern (7a) versehenen, über ein Halsteil (5) am Antriebsschaft (1) schwenkbar gelagerten Kopf (7) aufweist und zur schwenkbaren Lagerung des Fräsers (4) zwischen Antriebsschaft (1) und Halsteil (5) ein Kugelgelenk (3e, 6) mit einem Kugelkopf (6) am freien Ende des Halsteiles (5) und einer Kugelpfanne (3e) am Antriebsschaft (1) vorgesehen ist und der Antriebsschaft (1) ausserhalb der koaxialen Axialprojektion des Halsteiles (5) im wesentlichen radial verlaufende Anschlagflächen (3c) an einem das Halsteil (5) übergreifenden Führungsbereich des Antriebsschaftes (1) für das Halsteil (5) aufweist, **dadurch gekennzeichnet,** dass der Fräser (4) sich in Bohrrichtung axial an den Antriebsschaft (1) anschliesst und der Führungsbereich eine Zentralbohrung (3a) mit kreisrunder Axialprojektion sowie ein von der Zentralbohrung (3a) in der Axialprojektionsebene sich exzentrisch erstreckendes, die Anschlagflächen (3c) bildendes Langloch (3b) mit dem Durchmesser der Zentralbohrung (3a) entsprechenden Breite aufweist.

2. Fräswerkzeug nach Anspruch 1, dadurch gekennzeichnet, dass die exzentrische Erstreckung des Langloches (3b) zum bohrrichtungsseitigen freien Ende des Führungsbereiches hin zunimmt.

## Claims

1. Milling tool for producing sectional peripheral extensions (13) in boreholes (12) of components (11) of brickwork, concrete and similar materials, comprising a driveshaft (1) with at least one cutter (4), in which respect the cutter (4) comprises a head (7), which is provided with cutting elements (7a) and arranged to be pivotable over a neck section (5) on the driveshaft (1), and is provided for pivotable mounting of the cutter (4) between driveshaft (1) and neck section (5) with a ball joint (3e, 6) having a ball head (6) at the free end of the neck section (5) and a ball socket (3e) at the driveshaft (1), and the driveshaft (1) comprises outside the coaxial axial projection of the neck section (5) substantially radially extending stop surfaces (3c) at a guide region, which extends beyond the neck section (5), of the driveshaft (1) for the neck section (5), **characterised in that** the cutter (4) connects to the driveshaft (1) axially in the boring direction, and the guide region comprises a central bore (3a) with circular axial projection as well as an elongated hole (3b), which extends eccentrically from the central bore (3a) and forms the stop surfaces (3c) and which has a diameter which corresponds with the width of the central bore (3a).

2. Milling tool according to claim 1, **characterised in that** the eccentric extent of the elongated hole (3b) increases towards the free end of the guide region in the boring direction.

## Revendications

1. Outil de fraisage pour réaliser par sections des élargissements (13) circulaires dans des perçages (12) dans des éléments de construction (11) en maçonnerie, béton ou matériaux analogues, comprenant une tige d'entraînement (1) et au moins une fraise (4), la fraise (4) comportant une tête (7) munie de corps de coupe (7a) et montée de manière pivotante sur la tige d'entraînement (1) par l'intermédiaire d'un élément de col (5), un joint sphérique (3e, 6) avec une tête sphérique (6) à l'extrémité libre de l'élément de col (5) et un coussinet sphérique (3e) sur la tige d'entraînement (1) étant prévu pour la fixation pivotante de la fraise (4) entre la tige d'entraînement (1) et l'élément de col (5), et la tige d'entraînement (1) présentant, à l'extérieur de la projection axiale coaxiale de l'élément de col (5), des surfaces d'arrêt (3c) d'extension sensiblement radiale sur une zone de guidage de la tige d'entraînement (1) pour l'élément de col (5), laquelle recouvre ledit élément de col (5), **caractérisé en ce** que, dans la direction de perçage, la fraise (4) fait axialement suite à la tige d'entraînement (1) et que la zone de guidage comporte un alésage central (3a) avec une projection axiale circulaire ainsi qu'un trou oblong (3b) d'une largeur correspondant au diamètre de l'alésage central (3a), qui s'étend de manière excentrée à partir de l'alésage central (3a) dans le plan de la projection axiale et forme les surfaces d'arrêt (3c).

2. Outil de fraisage selon la revendication 1, caractérisé en ce que l'extension excentrée du trou oblong (3b) augmente en direction de l'extrémité libre de la zone de guidage située du côté perçage.
